# EUROPEAN PATENT APPLICATION

(11) **EP 1 868 052 A2**
(43) Date of publication of application: **19.12.2007**
(21) Application number: 07011076.2
(22) Date of filing: 05.06.2007
(51) Int. Cl.: G05B 19/18, G08B 13/14

(54) **Displacement detector and machine having displacement detector**

(30) Priority: 12.06.2006 JP 2006162037
(71) Applicant: YAMAZAKI MAZAK CORPORATION, Niwa gun, Aichi pref. (JP)
(72) Inventor: Mizukado, Masayoshi, c/o Yamazaki Mazak Corp., Niwa-gun, Aichi pref. (JP); Hasegawa, Atsushi, c/o Yamazaki Mazak Corp., Niwa-gun, Aichi pref. (JP); Sano, Yuji, c/o Yamazaki Mazak Corp., Niwa-gun, Aichi pref. (JP); Misawa, Takashi, c/o Yamazaki Mazak Corp., Niwa-gun, Aichi pref. (JP)
(74) Representative: Kramer, Reinhold

(57) **Abstract**

A gyro sensor 12 is secured to a machine tool 1. When the machine tool 1 is displaced, the gyro sensor 12 detects rotation of the machine tool 1. The machine tool 1 has a rotation detecting unit 8. Based on rotation data obtained by the gyro sensor 12, the rotation detecting unit 8 determines whether the machine tool 1 has been displaced. If the maximal rotation angle of the machine tool 1 exceeds a predetermined value, the rotation detecting unit 8 determines that the machine tool 1 has been displaced. The rotation detecting unit 8 has history data of the rotation angle recorded in a period from the time at which detection of the rotation angle of the machine tool 1 is started to the time at which such detection is ended. The rotation detecting unit 8 determines whether the machine tool 1 has been displaced using the history data.

## Description

### BACKGROUND OF THE INVENTION

The present invention relates mainly to a displacement detector that determines whether a machine such as a machine tool has been displaced from a predetermined installation site and a machine having the displacement detector.

Generally, it is desired that high-precision machines and high-performance machines be prevented from being exported illegally and installed under conditions instructed by a manufacturer. It is thus extremely important to monitor whether such machines have been displaced.

For example, Japanese Laid-Open Patent Publication No. 2003-35595 discloses a technique in which a vibration detector detects vibration of a machine tool caused by displacement of the machine tool or by an earthquake. When such vibration is detected, activation of the machine tool is prohibited or operation of the machine tool is suspended. However, since the device of this document detects all types of vibrations including those caused by the operation of the machine tool and an earthquake, it is difficult to determine whether such vibration has been brought about by displacement of the machine tool.

### SUMMARY OF THE INVENTION

Accordingly, it is an objective of the present invention to provide a displacement detector that easily determines whether a machine has been displaced, and a machine having the displacement detector.

To achieve the foregoing objective and in accordance with a first aspect of the present invention, a displacement detector that determines whether a machine installed at a predetermined position has been displaced from the position is provided. The detector includes an element and a determining device. The element detects rotation of the machine caused by change of the orientation of the machine. The determining device determines whether the machine has been displaced based on rotation data of the machine obtained by the element.

In accordance with a second aspect of the present invention, a machine having the displacement detector according to the above first aspect is provided. The machine has a displacement determination processing section that communicates information with the displacement detector. In response to a demand from the displacement determination processing section, the determining device transmits information indicating whether the machine has been displaced to the displacement determination processing section. When a body power switch of the machine is turned on, the displacement determination processing section outputs an ON instruction to the power ON/OFF circuit and receives the information indicating whether the machine has been displaced. If the machine has been displaced, the displacement determination processing section restricts operation of the machine.

### BRIEF DESCRIPTION OF THE DRAWINGS

Fig. 1(A) is a side view showing a machine tool installed at an installation site;
Fig. 1(B) is a plan view showing the machine tool;
Fig. 1(C) is a block diagram representing a rotation detecting unit and a displacement determination processing section;
Fig. 2 is a perspective view showing the machine tool displaced from the installation site to a different position;
Fig. 3 is a plan view showing the machine tool that rotates when being moved from the installation site to the different position;
Fig. 4 is a block diagram representing the configuration of the rotation detecting unit according to a first embodiment of the present invention;
Fig. 5 is a flowchart representing a rotation detecting unit procedure;
Fig. 6 is a flowchart representing a communication procedure of the first embodiment;
Fig. 7 is a flowchart representing a detection procedure of the first embodiment;
Fig. 8 is a flowchart representing a procedure performed when the power source of the body of the machine tool is turned on;
Fig. 9 is a block diagram representing the configuration of a rotation detecting unit according to a second embodiment of the present invention;
Fig. 10 is a flowchart representing a detection procedure of the second embodiment;
Fig. 11 is a flowchart representing a data updating procedure of the second embodiment;
Fig. 12 is a flowchart representing a communication procedure of the second embodiment; and
Fig. 13 is a table representing data obtained through the detection procedure of the second embodiment.

### DETAILED DESCRIPTION OF THE PREFERRED EMBODIMENTS

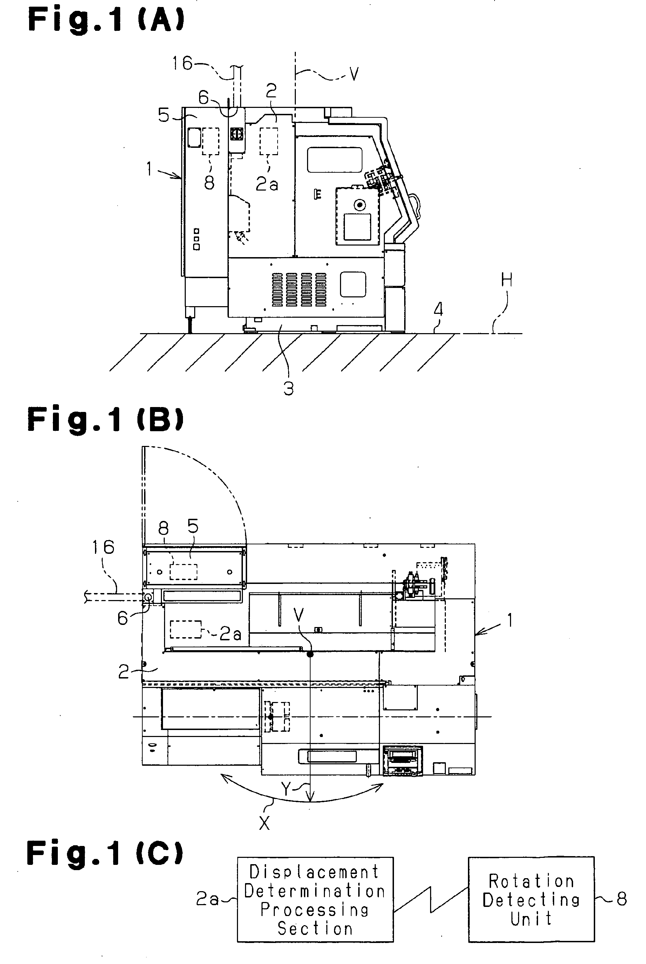

A displacement detector according to a first embodiment of the present invention will now be described with reference to Figs. 1 to 8.

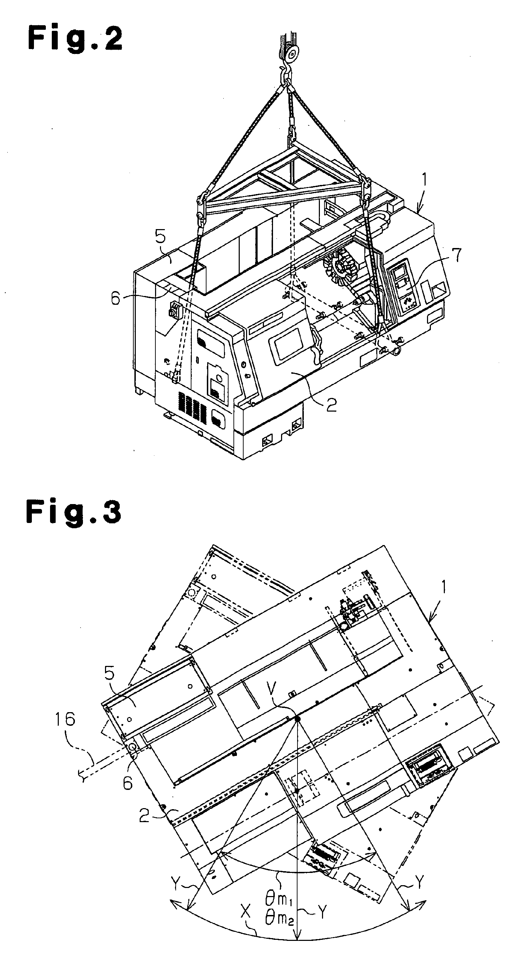

As shown in Figs. 1(A) to 1(C) and 2, a machine tool 1, or a machine, has an installing portion 3 formed in a bottom portion of a machine body 2. The machine tool 1 is installed horizontally at an installation site 4 through the installing portion 3. A control panel 5 and a power port 6 are provided at a rear surface of the machine body 2. A control panel 7 is arranged at a front surface of the machine body 2. A rotation detecting unit 8 is incorporated in the control panel 5 as a determining device. The rotation detecting unit 8 performs a communication procedure with a displacement determination processing section 2a, which is provided in the machine body 2. In accordance with the communication procedure, it is determined whether the machine tool 1 has been displaced.

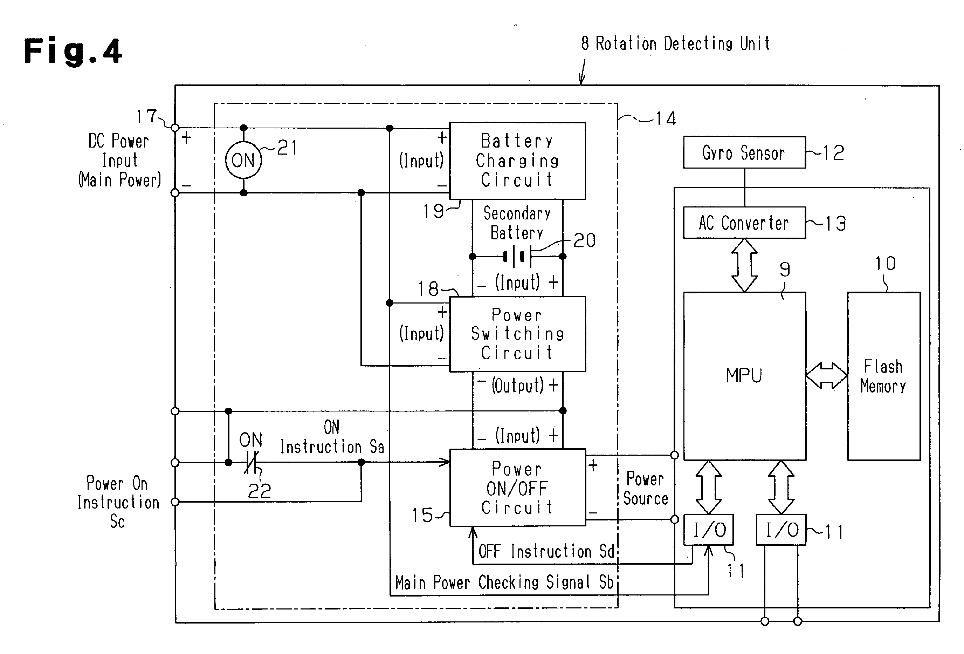

As illustrated in Figs. 3 and 4, the rotation detecting unit 8 includes an MPU 9. A flash memory 10 and an input-output device 11 are connected to the MPU 9. A gyro sensor 12 serving as an element is connected to the MPU 9 through an A/D converter 13. The gyro sensor 12 detects rotation of the machine tool 1 caused by change of the orientation Y of the machine tool 1. The machine tool 1 rotates about the vertical line V, which is perpendicular to the horizontal surface H at the installation site 4. Also, a power ON/OFF circuit 15 of a power supply circuit 14 is connected to the MPU 9.

When a power cable 16 is connected to the power port 6, a main power terminal 17 of the rotation detecting unit 8 is connected to a non-illustrated main power source (a DC power source). When a non-illustrated body power switch of the machine tool 1 is turned on, the power is supplied from the main power terminal 17 to the rotation detecting unit 8. The main power terminal 17 is connected to a power switching circuit 18. A secondary battery 20 is connected to the power switching circuit 18. The secondary battery 20 is charged by the main power terminal 17 through a battery charging circuit 19. The power is supplied selectively from the main power terminal 17 and the secondary battery 20 to the power ON/OFF circuit 15 through the power switching circuit 18.

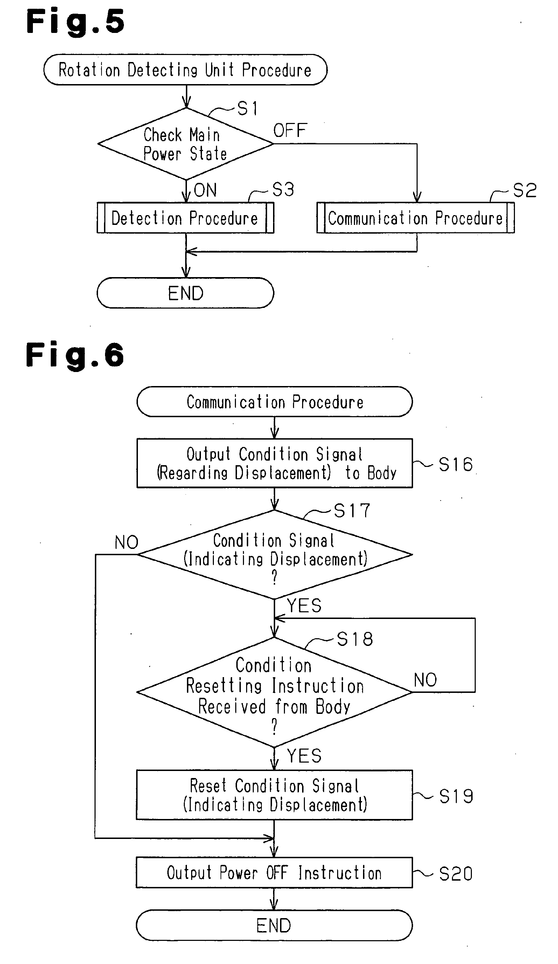

When receiving power from the main power terminal 17, the power switching circuit 18 supplies the power to the power ON/OFF circuit 15. Contrastingly, when receiving no power from the main power terminal 17, the power switching circuit 18 supplies the power from the secondary battery 20 to the power ON/OFF circuit 15. A relay coil 21 is connected to the main power terminal 17. A normally closed contact 22 is connected to the power ON/OFF circuit 15. The normally closed contact 22 is selectively opened and closed through excitation or de-excitation of the relay coil 21. Based on a signal input from the gyro sensor 12 or the like, the MPU 9 performs different types of procedures based on the flowcharts of Figs. 5 to 8 and stores different types of data in the flash memory 10.

Such power supply to the machine tool 1 is suspended if the power cable 16 is removed from the power port 6 or the breaker trips due to power outage caused by an earthquake or the like or the machine tool 1 is displaced from the installation site 4. The power supply to the rotation detecting unit 8 is also stopped. At this stage, the relay coil 21 is de-excited and the normally closed contact 22 is closed. In this state, an ON instruction Sa is sent to the power ON/OFF circuit 15. In response to the ON instruction Sa, the power is supplied from the secondary battery 20 to the MPU 9 through the power switching circuit 18 and the power ON/OFF circuit 15.

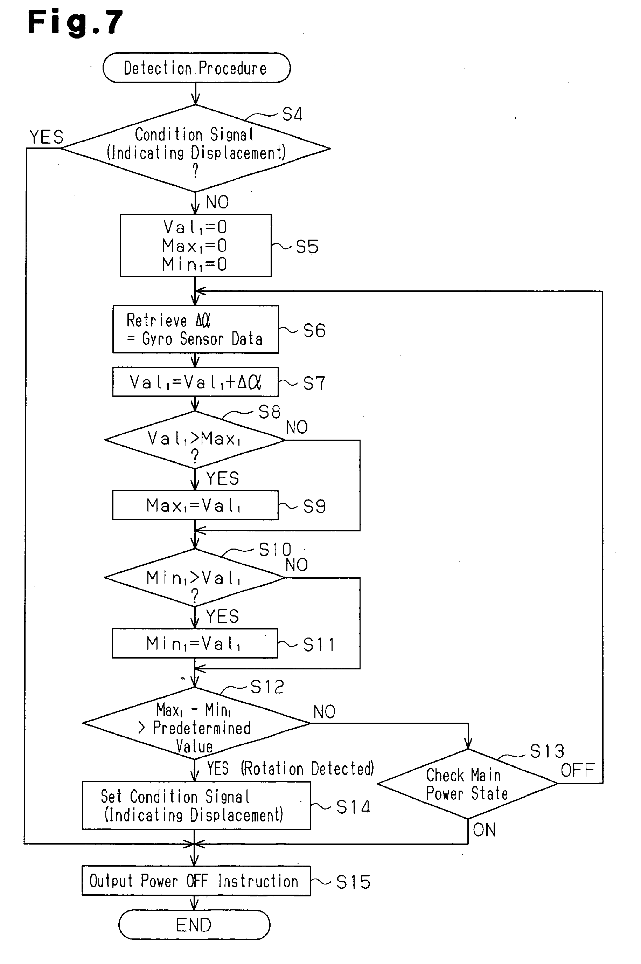

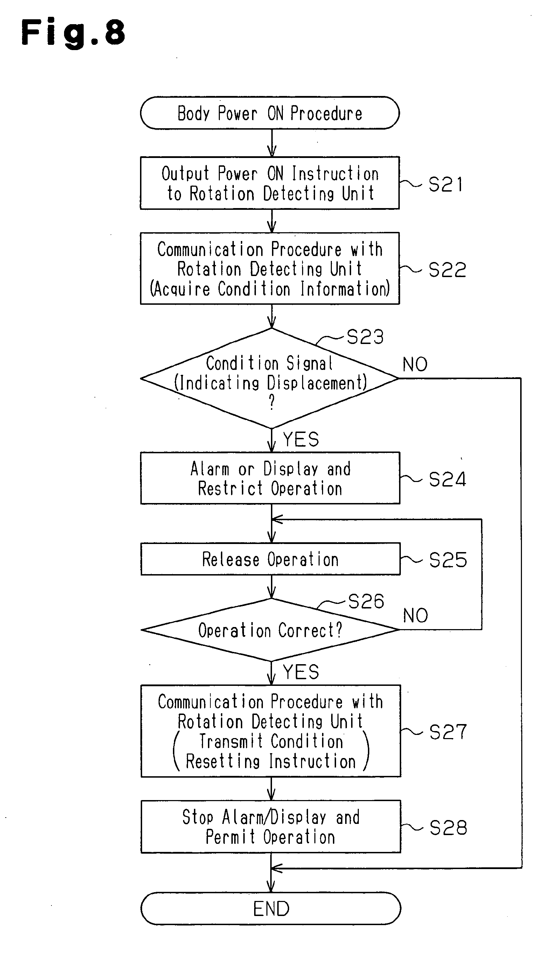

Referring to Figs. 4 and 5, when the power is supplied to the MPU 9 to turn on the MPU 9, the MPU 9 executes a rotation detecting unit procedure. At this stage, the MPU 9 receives a main power checking signal Sb from the main power terminal 17 through the input-output device 11. In response to the main power checking signal Sb, the MPU 9 checks the state of the main power in step S1. After having determined that the main power is OFF, the MPU 9 performs step S2 to detect rotation data of the machine tool 1 and thus carries out the detection procedure represented in Fig. 7. The machine tool 1 may be temporarily placed at a different position in transportation from the installation site 4 or installed in a different site. In these cases, the power cable 16 is connected to the power port 6 and the body power switch of the machine tool 1 is turned on so that the procedure represented in Fig. 8 is carried out. At this stage, the MPU 9 receives a power ON instruction Sc from the displacement determination processing section 2a of the machine body 2. In response to the power ON instruction Sc, the MPU 9 is turned on by the power supplied from the main power terminal 17. Then, based on the main power checking signal Sb provided by the main power terminal 17, the MPU 9 checks the state of the main power in step S1. After having determined that the main power is ON, the MPU 9 carries out step S3 to perform the communication procedure represented in Fig. 6. Data is transferred from the rotation detecting unit 8 to the machine body 2 through the communication procedure.

When the machine tool 1 is mounted on a transport vehicle for transportation to a different site, the orientation of the machine tool 1 is changed in a rotating direction about the vertical line V (see Figs. 2 and 3). In this state, the gyro sensor 12 detects rotation of the machine tool 1 caused by the change of the orientation Y of the machine tool 1. In step S4 of the detection procedure represented in Fig. 7, the MPU 9 determines whether the machine tool 1 has been displaced based on the condition signal that has been previously generated. If it is determined that the machine tool 1 has not been displaced, the MPU 9 carries out step S5. In step S5, the MPU 9 resets Val₁, Max₁, and Min₁ to 0. Val₁ represents displacement detection internal data, or a rotation angle. Max₁ represents rotation data in terms of the forward direction of the rotating directions X shown in Fig. 3. Min₁ represents rotation data in terms of the reverse direction of the rotating directions X shown in the drawing. In step S6, in accordance with the detection data obtained by the gyro sensor 12, the MPU 9 acquires the rotation data of the machine tool 1 as the rotation angle Δα. The MPU 9 then performs step S7.

In step S7, the MPU 9 determines Val₁ using the following equation: Val₁ = Val₁ + Δα. Val₁ is a rotation angle and set to 0° at the start of the detection. Val₁ is used as internal data in accordance with which it is determined whether the machine tool 1 has been displaced. In step 88, the MPU 9 compares Val₁ with Max₁. If Val₁ exceeds Max₁, the MPU 9 updates Val₁ to Max₁ in step S9. If Val₁ does not exceed Max₁, the MPU 9 carries out step S10 without updating Val₁ to Max₁ and compares Val₁ with Min₁. If Val₁ is less than Min₁, the MPU 9 updates Val₁ to Min₁ in step S11. If Val₁ is not less than Min₁, the MPU 9 carries out step S12 without updating Val₁ to Min₁.

In step S12, the MPU 9 compares the maximal rotation angle θm₁ (see Fig. 3), or the difference between Max₁ and Min₁, with the predetermined value θr₁ (the minimal value of the rotation angle in the rotation assumed to have been caused by displacement of the machine tool 1). If θm₁ does not exceed θr₁, the MPU 9 carries out step S13. In step S13, the MPU 9 checks the state of the main power source. If it is determined that the main power is OFF, it is likely that the power cable 16 has been removed from the power port 6 to displace the machine tool 1 from the installation site 4. In this case, the MPU 9 repeats step S6 and detects the rotation data of the machine tool 1 repeatedly. If θm₁ exceeds θr₁, the MPU 9 performs step S14 and sets a condition signal indicating that the machine tool 1 has been displaced. The MPU 9 then carries out step S15.

If the MPU 9 determines that the machine tool 1 has been displaced in step S4, the MPU 9 executes step S15 without detecting the rotation data of the machine tool 1, which has been described. The MPU 9 performs step S15 also when the MPU 9 determines that the main power is ON in step S13. In step S15, the MPU 9 sends an OFF instruction Sd to the power ON/OFF circuit 15 (see Fig. 4). In response to the OFF instruction Sd, the power ON/OFF circuit 15 is turned off and the power supply to the MPU 9 is stopped. The detection procedure is thus ended. In the series of processing from step S4 to step S15, Max₁ and Min₁ are updated and the maximal rotation angle θm₁ is detected. As long as the maximal rotation angle θm₁ does not exceed the predetermined value θr₁, the detection procedure is repeatedly carried out. However, once the maximal rotation angle θm₁ exceeds the predetermined value θr₁, the detection procedure is ended.

The communication procedure represented in Fig. 6 is performed if the power cable 16 is reconnected to the power port 6 and the body power switch of the machine tool 1 is turned on when the machine tool 1 is temporarily placed at a different position in transportation from the installation site 4 or installed in a different installation site. When the body power switch of the machine tool 1 is turned on, the displacement determination processing section 2a of the machine body 2 outputs the power ON instruction Sc. In response to the power ON instruction Sc, the power ON/OFF circuit 15 is turned on (see Fig. 4). This supplies the power from the main power source to the MPU 9 through the power switching circuit 18. In step S16, a condition signal indicating whether the machine tool 1 has been displaced is sent from the MPU 9 to the displacement determination processing section 2a. In step S17, based on the condition signal, the MPU 9 determines whether the machine tool 1 has been displaced. If the MPU 9 determines that the machine tool 1 has been displaced, the MPU 9 performs step S18, or determines whether a condition reset instruction has been output from the displacement determination processing section 2a. If it is determined that the condition reset instruction has been output, the MPU 9 performs step S19.

In step S19, the MPU 9 resets the condition signal indicating that the machine tool 1 has been displaced. The MPU 9 then carries out step S20. If it is determined that the condition reset instruction has not been output, the MPU 9 repeatedly determines whether the condition reset instruction has been output. If the MPU 9 determines that the machine tool 1 has not been displaced based on the condition signal in step S17, the MPU 9 performs step S20. In step S20, the MPU 9 provides the OFF instruction Sd to the power ON/OFF circuit 15 (see Fig. 4). In response to the OFF instruction Sd, the power ON/OFF circuit 15 is turned off and the power supply from the main power source to the MPU 9 is suspended. The communication procedure is thus ended. In the series of processing from steps S16 to S20, after having sent the condition signal indicating whether the machine tool 1 has been displaced to the displacement determination processing section 2a, the MPU 9 resets the condition signal, which indicates whether the machine tool 1 has been displaced, based on the instruction provided by the displacement determination processing section 2a. The MPU 9 then ends the communication procedure.

Finally, to allow the use of the machine body 2, the procedure represented in Fig. 8 is performed. Specifically, when the body power switch of the machine tool 1 is turned on, the displacement determination processing section 2a sends the power ON instruction Sc to the rotation detecting unit 8 in step S21. In response to the power ON instruction Sc, the power ON/OFF circuit 15 is activated and the power supply from the main power source to the MPU 9 is started. In step S22, the above-described communication procedure is carried out between the rotation detecting unit 8 and the displacement determination processing section 2a. In step S23, the displacement determination processing section 2a determines whether the machine tool 1 has been displaced based on the condition signal. If the determination of step S23 is positive, the displacement determination processing section 2a informs the operator that the machine tool 1 has been displaced through an alarm or a display screen provided on the control panel 7, and restricts the operation of the machine tool 1 in step S24. Such restriction is performed by, for example, prohibiting automatic activation of the machine.

In step S25, a canceling operation is performed to permit the machine tool 1 to operate. The canceling operation is carried out through manipulation of a switch with a key or inputting of a password to turn on a cancel switch. In step S26, the displacement determination processing section 2a determines whether the canceling operation has been carried out correctly. If determination of step S26 is positive, the displacement determination processing section 2a performs step S27. If the determination is negative, the displacement determination processing section 2a repeats step S25, or determines whether the canceling operation has been performed correctly.

In step S27, the above-described communication procedure is performed between the rotation detecting unit 8 and the displacement determination processing section 2a. At this stage, the displacement determination processing section 2a sends a condition reset instruction to the rotation detecting unit 8. Step S28 is then performed. In step S28, the displacement determination processing section 2a stops displaying information on the display or stops generating the alarm on the control panel 7. The displacement determination processing section 2a also cancels the restriction on the operation of the machine tool 1. The body power ON procedure is thus ended. If it is determined that the machine tool 1 has not been displaced in step S23, the displacement determination processing section 2a carries out step S28 without executing the above-described series of processing. The procedure is thus ended.

The first embodiment has the following advantages.
(1) In transportation of the machine tool 1 from the installation site, the orientation of the machine tool 1 is changed. In the first embodiment, the gyro sensor 12, or the element, is secured to the machine tool 1. The machine tool 1 also has the rotation detecting unit 8 serving as the determining device. The rotation detecting unit 8 determines whether the machine tool 1 has been displaced based on the rotation data obtained by the gyro sensor 12. In this manner, the gyro sensor 12 detects change of the orientation Y of the machine tool 1 as rotation of the machine tool 1. The rotation detecting unit 8 thus easily determines whether the machine tool 1 has been displaced.
(2) The rotation data of the machine tool 1 represents the maximal rotation angle θm₁ caused by the change of the orientation Y of the machine tool 1. The rotation detecting unit 8 determines whether the machine tool 1 has been displaced depending on whether the maximal rotation angle θm₁ has exceeded the predetermined value θr₁. That is, using the maximal rotation angle θm₁, the rotation detecting unit 8 easily determines whether the machine tool 1 has been displaced.
(3) The rotation data is obtained based on the rotation angle of the machine tool 1 about the vertical line V perpendicular to the horizontal surface H of the installation site 4. Thus, with reference to the rotation angle of the machine tool 1 about the vertical line V, it is easily determined whether the machine tool 1 has been displaced.
(4) The rotation detecting unit 8 has the power ON/OFF circuit 15. When the power supply to the machine tool 1 is blocked, the rotation detecting unit 8 outputs the ON instruction Sa to the power ON/OFF circuit 15, and starts detecting the rotation angle of the machine tool 1. When the power supply to the machine tool 1 is resumed, the rotation detecting unit 8 outputs an OFF instruction Sd to the power ON/OFF circuit 15 and ends detection of the rotation angle of the machine tool 1. This saves the power consumed in the detection of the rotation angle of the machine tool 1. In this case, it is defined that the condition of the machine tool 1 is changed if the power supply to the machine tool 1 has been cut or resumed.
(5) When the rotation detecting unit 8 determines that the machine tool 1 has been displaced, the rotation detecting unit 8 outputs an OFF instruction Sd to the power ON/OFF circuit 15 and ends the determination regarding displacement of the machine tool 1. In other words, such determination is suspended immediately after it is clearly determined that the machine tool 1 has been displaced. This saves the power consumed in the processing of the determination.
(6) If the power cable 16 is removed from the machine tool 1 to cut the power supply to the machine tool 1, it is likely that the machine tool 1 is to be moved. The rotation detecting unit 8 thus provides the ON instruction Sa to the power ON/OFF circuit 15 and starts determining whether the machine tool 1 has been displaced. If the power cable 16 is connected to the machine tool 1 to resume the power supply to the machine tool 1, it is likely that the displacement of the machine tool 1 has been completed. The rotation detecting unit 8 thus sends the OFF instruction Sd to the power ON/OFF circuit 15 and ends the determination regarding displacement of the machine tool 1. That is, such determination is suspended immediately after it is clearly determined that the machine tool 1 has been displaced. This saves the power consumed in the processing of such determination.
(7) As required by the displacement determination processing section 2a, the rotation detecting unit 8 provides information regarding displacement of the machine tool 1 to the displacement determination processing section 2a. When the body power switch of the machine tool 1 is turned on, the displacement determination processing section 2a outputs the power ON instruction Sc to the power ON/OFF circuit 15 and receives the information regarding displacement of the machine tool 1. If it is determined that the machine tool 1 has been displaced, the operation of the machine tool 1 is restricted. In this case, the information regarding the displacement of the machine tool 1 is communicated between the rotation detecting unit 8 and the machine body 2. If the machine tool 1 has been displaced, the operation of the machine tool 1 is restricted regardless of whether such displacement has been brought about in an unauthorized manner. This effectively prevents unauthorized use of the machine tool 1. The machine body 2 is permitted to operate only through the predetermined canceling operation.

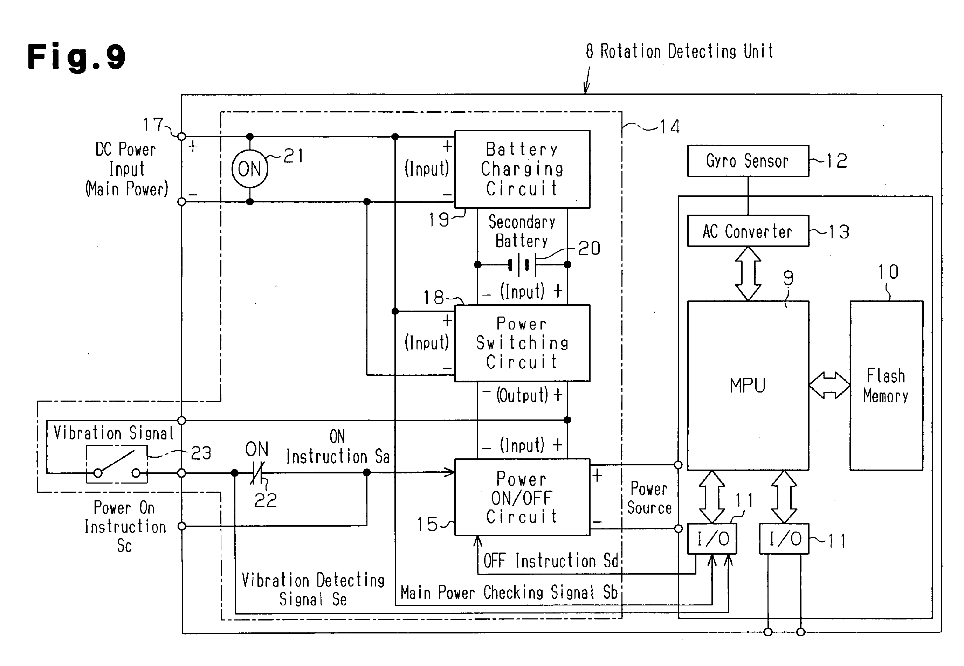

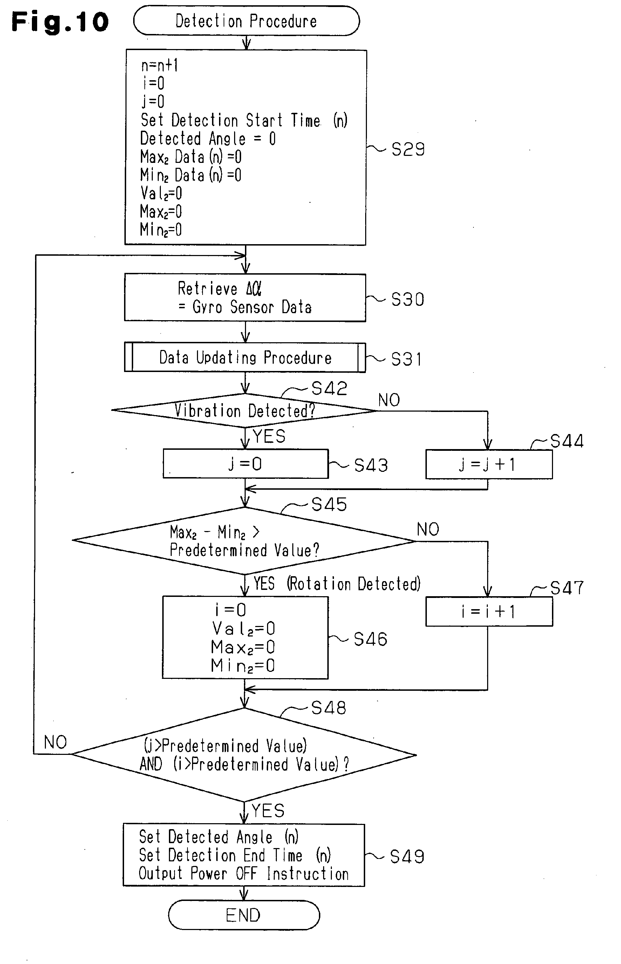

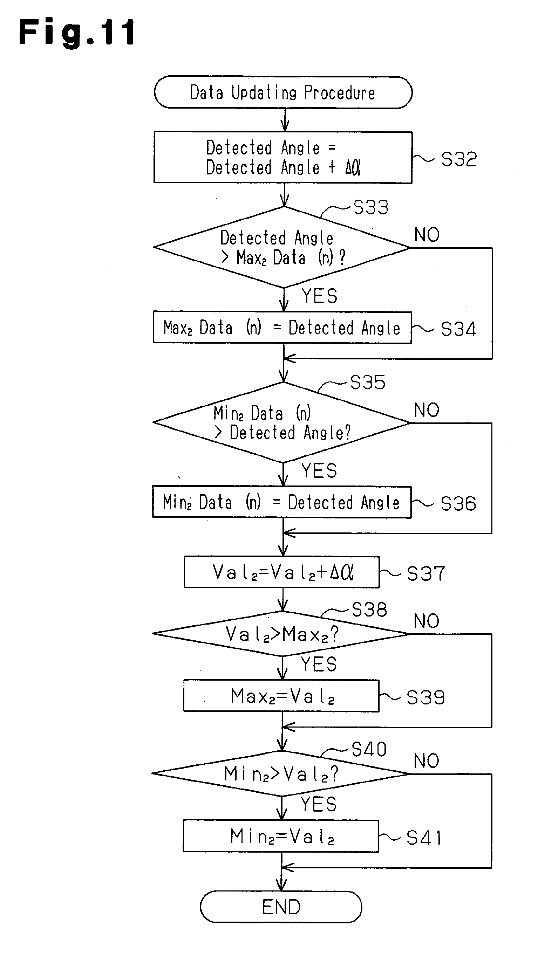

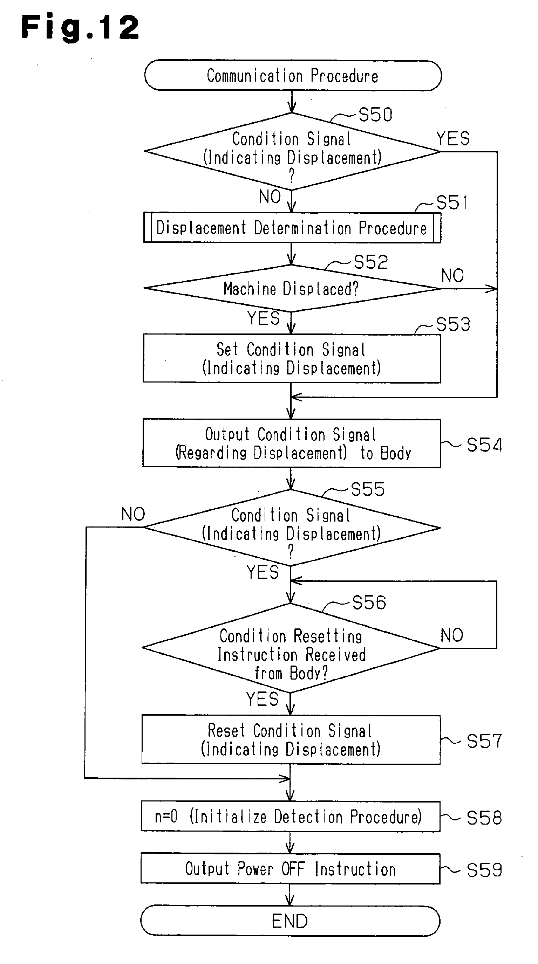

Next, a displacement detector according to a second embodiment of the present invention will be explained with reference to Figs. 1 to 3, 5, 8, and 9 to 13. The explanation will focus on the differences between the first embodiment and the second embodiment. Figs. 9 and 12 correspond to Figs. 4 and 6, respectively. Figs. 10 and 11 each correspond to Fig. 7.

As illustrated in Fig. 9, a vibration sensor 23 is connected in series with the normally closed contact 22 in the rotation detecting unit 8. The vibration sensor 23 is switched from OFF to ON when sensing vibration exceeding a predetermined level. When the body power switch of the machine tool 1 is turned off and the power supply to the main power terminal 17 is stopped, the relay coil 21 is de-excited and the normally closed contact 22 is closed. In this state, if the vibration sensor 23 senses vibration exceeding the predetermined level and is switched on, an ON instruction Sa is sent to the power ON/OFF circuit 15. In response to the ON instruction Sa, the MPU 9 receives the power from the secondary battery 20 through the power switching circuit 18 and the power ON/OFF circuit 15. The MPU 9 performs different procedures and stores different types of data in the flash memory 10 based on an input signal from the gyro sensor 12 or the like and in accordance with the flowcharts illustrated in Figs. 5, 8, and 10 to 12.

In the first embodiment, the communication procedure is carried out only after the machine tool 1 is re-installed at a final installation site and the body power switch of the machine tool 1 is turned on. The machine tool 1 may be temporarily placed at a plurality of positions in transportation from the initial installation site to the final installation site. The above-described detection procedure is performed continuously throughout such transportation. In the second embodiment, if the machine tool 1 is placed at a plurality of positions in the transportation from the original installation site to the final installation site and maintained at a certain position for a prolonged time, the detection procedure is not performed. The detection procedure is carried out only once each time the machine tool 1 is moved from one site to another. In other words, a first cycle of the detection procedure is performed when the machine tool 1 is located at a site between the original installation site 4 and a first installation site. That is, an nth cycle of detection procedure is carried out when the machine tool 1 is located at a position between an (n-1)th installation site and an n th installation site.

Referring to Fig. 10, in step S29, the MPU 9 resets n to n+1, i to 0, j to 0, the detected angle to 0, Max₂ data (n) to 0, Min₂ data (n) to 0, Val₂ to 0, Max₂ to 0, and Min₂ to 0. The MPU 9 then sets the detection start time (n), or a detection start point in time. The reference index i represents a rotation non-detected count and the reference index j represents a vibration non-detected count. Val₂ represents internal data for detection of rotation, or a rotation angle. Max₂ represents rotation data in terms of the forward direction of the rotating directions X. Min₂ represents rotation data in terms of the reverse direction of the rotating directions X. The detection start time (n), the detection end time (n), Max₂ data (n), Min₂ data (n), and the detected angle (n) are history data obtained in the nth cycle of the detection procedure. In step S30, the MPU 9 acquires the rotation data of the machine tool 1 as the rotation angle Δα based on the detection data obtained by the gyro sensor 12. Subsequently, the MPU 9 carries out step S31, or performs the data updating procedure (steps S32 to S41) illustrated in Fig. 11.

As illustrated in Fig. 11, in step S32, the MPU 9 obtains the detected angle from the equation: detected angle = detected angle + Δα. The detected angle is the rotation angle and set to 0° at the start of the detection. The detected angle is used in computation of the history data. In step S33, the MPU 9 compares the detected angle with the Max₂ data (n). If the detected angle exceeds the Max₂ data (n), the MPU 9 updates the detected angle to the Max₂ data (n) in step S34. If the detected angle does not exceed the Max₂ data (n), the MPU 9 performs step S35 without updating the detected angle to the Max₂ data (n). In step S35, the MPU 9 compares the detected angle with the Min₂ data (n). If the detected angle is less than the Min₂ data (n), the MPU 9 updates the detected angle to the Min₂ data (n) in step S36. If the detected angle is not less than the Min₂ data (n), the MPU 9 performs step S37 without updating the detected angle to the Min₂ data (n). In the series of processing from step S32 to step S36, the Max₂ data (n) and the Min₂ data (n) are updated each time the data of the corresponding cycle is updated.

In step S37, the MPU 9 obtains Val₂ using the equation: Val₂ = Val₂ + Δα. Val₂ is the rotation angle and set to 0° in the latest determination that the machine tool 1 has been rotated. Val₂ is used as internal data to determine whether the machine tool 1 has been rotated. In step S38, the MPU 9 compares Val₂ with Max₂. If Val₂ exceeds Max₂, the MPU 9 updates Val₂ to Max₂ in step S39. If Val₂ does not exceed Max₂, the MPU 9 performs step S40 without updating Val₂ to Max₂. In step S40, the MPU 9 compares Val₂ with Min₂. If Val₂ is less than Min₂, the MPU 9 updates Val₂ to Min₂ in step S41. If Val₂ is not less than Min₂, the MPU 9 performs step S42 without updating Val₂ to Min₂. In the series of processing from step S37 to step S41, Max₂ data and Min₂ data are updated each time the data of the corresponding cycle is updated.

In transportation of the machine tool 1, the vibration sensor 23 is switched on when detecting vibration of the machine tool 1. The vibration sensor 23 then outputs a vibration signal, which is input to the MPU 9. As illustrated in Fig. 10, in step S42, the MPU 9 determines whether the machine tool 1 has been vibrated based on the vibration signal. If such determination is positive, the MPU 9 performs step S43. In step S43, the MPU 9 resets j to 0 and carries out step S45. Contrastingly, if the determination is negative, the MPU 9 performs step S44. The MPU 9 counts vibration non-detection in step S44 and then carries out step S45. In step S45, the MPU 9 compares the maximal rotation angle θₘ₂, or the difference between Max₂ and Min₂, with a predetermined angle θr₂. If θm₂ exceeds θr₂, the MPU 9 determines that the machine tool 1 has been rotated. Then, the MPU 9 resets i, Val₂, Max₂, and Min₂ to 0 in step S46 and then performs step S48. Contrastingly, if θm₂ does not exceed θr₂, the MPU 9 carries out step S47 and counts the rotation non-detection. In step S48, the MPU 9 determines whether i and j both exceed the predetermined values. If such determination is positive, the MPU 9 performs step S49. The vibration non-detection count j and the rotation non-detection count i are the values that can be converted into time. Thus, if detection of vibration by the vibration sensor 23 lasts beyond a predetermined time and detection of rotation data by the gyro sensor 12 lasts beyond a predetermined time, the MPU 9 sets the detected angle (n) and the detection end time (n), or the detection end timing, and provides an OFF instruction Sd to the power ON/OFF circuit 15 in step S49. The MPU 9 then ends the detection procedure.

If, in step S48, it is determined that the detection of vibration by the vibration sensor 23 or the detection of rotation data by the gyro sensor 12 has ended within the predetermined time, or that at least one of i and j is less than the corresponding one of the predetermined values, the MPU 9 performs step S30 and repeats the above-described detection procedure. In the series of processing from steps S29 to S49, Max₂ and Min₂ are updated in each cycle of the detection procedure. In this series of processing, regardless of that the machine tool 1 is rotated or vibrated, the detection procedure is repeatedly performed as long as detection of the rotation data or the vibration of the machine tool 1 ends within the predetermined time. However, if such detection lasts beyond the predetermined time, the detection procedure is ended.

Like the first embodiment, the communication procedure represented in Fig. 12 is carried out when the body power switch of the machine tool 1 is turned on. When the body power switch of the machine tool 1 is turned on, the displacement determination processing section 2a outputs a power ON instruction Sc. In response to the power ON instruction Sc, the power ON/OFF circuit 15 is turned on and the power is supplied from the main power terminal 17 to the MPU 9 through the power switching circuit 18. In step S50, the MPU 9 determines whether the machine tool 1 has been displaced based on the condition signal that has been previously input. If it is determined that the machine tool 1 has been displaced, the MPU 9 carries out step S51.

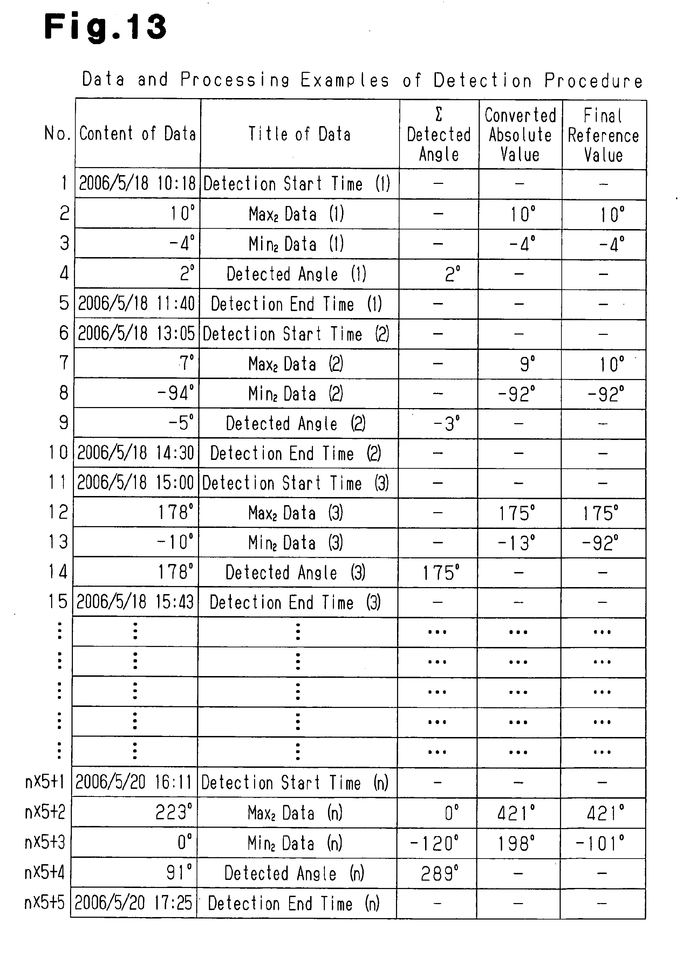

Fig. 13 represents the history data representing Max₂ data (n), Min₂ data (n), and the detected angle for each of the first to nth cycles of the detection procedure, which starts at the detection start time and ends at the detection end time. Based on the data, the MPU 9 determines the Σ detected angle obtained by sequentially adding the detected angles from the cycles of the detection procedure together, the absolute value converted from the Max₂ data (n) obtained by adding the previous E detected angle to the current Max₂ data (n), the absolute value converted from the Min₂ data (n) obtained by adding the previous Σ detected angle to the current Min₂ data (n), the final reference value corresponding to the maximum of the absolute value converted from the Max₂ data (n) of each cycle, and the final reference value corresponding to the minimum of the absolute value converted from the Min₂ data (n) of each cycle. The machine tool 1 displays the history data on the display screen of the control panel 7 or prints the data on paper.

Referring to Fig. 12, in step S51, the MPU 9 performs the displacement determination procedure similar to the corresponding procedure of the first embodiment, using the history data. In the first embodiment, the displacement determination procedure is carried out in the series of the detection procedure illustrated in Fig. 7. However, in the second embodiment, the displacement determination procedure is performed in the communication procedure represented in Fig. 12. Max₁ and Min₁ in step S12 correspond to the final reference value of the absolute value converted from Max₂ data (n) and the final reference value of the absolute value converted from Min₂ data (n). If, in the current cycle of the detection procedure, the detection time from the detection start time to the detection end time is shorter than a predetermined time, it is indicated that rotation of the machine tool 1 has not been detected after the original detection of vibration of the machine tool 1. The MPU 9 thus ignores the data from such detection.

If the MPU 9 determines that the machine tool 1 has been displaced in step S52, the MPU 9 performs step S53. In step S53, the MPU 9 sets the condition signal indicating that the machine tool 1 has been displaced. The MPU 9 then performs step S54. If the MPU 9 determines that the machine tool 1 has been displaced in step S50 or that the machine tool 1 has not been displaced in step S52, the MPU 9 carries out step S54. In step S54, the condition signal indicating whether the machine tool 1 has been displaced is sent from the MPU 9 to the displacement determination processing section 2a. Based on the condition signal, in step S55, the MPU 9 determines whether the machine tool 1 has been displaced. If the MPU 9 determines that the machine tool 1 has been displaced, the MPU 9 performs step S56. If, in step S56, the MPU 9 receives the condition reset instruction from the displacement determination processing section 2a, the MPU 9 carries out step S57. The MPU 9 resets the condition signal indicating that the machine tool 1 has been displaced in step S57 and then performs step S58. If the MPU 9 determines that the MPU 9 has not received the condition reset instruction from the displacement determination processing section 2a in step S56, the MPU 9 repeatedly determines whether the condition reset instruction has been received. If it is determined that the machine tool 1 has not been displaced in step S55, the MPU 9 performs step S58. In step S58, the MPU 9 resets n to 0 and initializes the detection procedure. The MPU 9 then performs step S59 in which the MPU 9 outputs an OFF instruction Sd to the power ON/OFF circuit 15. In response to the OFF instruction Sd, the power ON/OFF circuit 15 is turned off so that the power supply to the MPU 9 is blocked. The communication procedure is thus ended.

The second embodiment has the following advantages.
(1) The history data regarding the rotation angle is memorized at a time point in the period from the detection start timing, at which detection of the rotation angle of the machine tool 1 is started, to the detection end timing, at which such detection is ended. Based on the history data regarding the rotation angle, it is determined whether the machine tool 1 has been displaced. Such determination is thus carried out after detection of the rotation angle. Accordingly, it is easily determined whether the machine tool 1 has been displaced using the history data regarding the rotation angle detected at a time point in the period from the detection start timing to the detection end timing.
(2) The vibration sensor 23, which detects vibration of the machine tool 1, is secured to the machine tool 1. With the power supply to the machine tool 1 blocked, the ON instruction Sa is output to the power ON/OFF circuit 15 in response to the vibration detection signal Se, which is obtained by the vibration sensor 23, and detection of the rotation angle of the machine tool 1 is started. That is, the determination whether the machine tool 1 has been displaced is started if the condition that vibration of the machine tool 1 caused through transportation of the machine tool 1 has been detected is satisfied. This saves the power necessary for detecting the rotation angle of the machine tool 1. In this case, it is determined that the condition of the machine tool 1 has been changed if the machine tool 1 has been vibrated and rotated in transportation of the machine tool 1.
(3) If the detection of vibration by the vibration sensor 23 does not last beyond the predetermined time and detection of rotation data by the gyro sensor 12 does not last beyond the predetermined time, the rotation detecting unit 8 provides the OFF instruction Sd to the power ON/OFF circuit 15 and ends the detection of the rotation angle of the machine tool 1. This saves the power consumed in the detection of the rotation angle of the machine tool 1.

The illustrated embodiments may be modified in the following forms.

In each of the illustrated embodiments, the gyro sensor 12 detects rotation of the machine tool 1 on the horizontal surface H. However, the gyro sensor 12 may detect rotation of the machine tool 1 on a vertical plane. Further, in addition to the gyro sensor 12, a two-axis acceleration sensor may be used to obtain an angular speed, or a geomagnetic sensor may be employed to detect rotation. Also, the present invention may be used to detect whether a measurement device or a laser oscillator has been displaced, other than the machine tool 1.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A displacement detector that determines whether a machine installed at a predetermined position has been displaced from the position, the detector being **characterized by**:
an element that detects rotation of the machine caused by change of the orientation of the machine; and
a determining device that determines whether the machine has been displaced based on rotation data of the machine obtained by the element.

2. The displacement detector according to claim 1, being **characterized in that** the element is a gyro sensor.

3. The displacement detector according to claim 1 or 2, being **characterized in that** the rotation data represents a maximal rotation angle obtained from the rotation angle of the machine caused by the change of the orientation of the machine, and
wherein the determining device determines whether the machine has been displaced based on the maximal rotation angle.

4. The displacement detector according to claim 1 or 2, **being characterized in that** the rotation data represents a rotation angle of the machine caused by the change of the orientation of the machine,
wherein the determining device includes a power ON/OFF circuit that selectively switches on and off power supply to the determining device, and
wherein the determining device has history data of the rotation angle recorded in a period from a detection start timing, at which an ON instruction is output to the power ON/OFF circuit and detection of the rotation angle is started, to a detection end timing, at which an OFF instruction is output to the power ON/OFF circuit and the detection of the rotation angle is ended.

5. The displacement detector according to claim 4, being **characterized in that** the determining device determines whether the machine has been displaced based on the history data.

6. The displacement detector according to any one of claims 3 to 5, **being characterized in that** the rotation angle is a rotation angle about a vertical line perpendicular to a surface on which the machine is placed.

7. The displacement detector according to any one of claims 1 to 6, being **characterized in that** the determining device has a power ON/OFF circuit that selectively switches on and off power supply to the determining device, and
wherein, based on change of the condition of the machine, the determining device provides an ON instruction to the power ON/OFF circuit and starts the detection of the rotation angle of the machine.

8. The displacement detector according to any one of claims 1 to 6, being **characterized in that** the determining device has a power ON/OFF circuit that selectively switches on and off power supply to the determining device, and
wherein, based on change of the condition of the machine, the determining device provides an OFF instruction to the power ON/OFF circuit and ends the detection of the rotation angle of the machine.

9. The displacement detector according to any one of claims 1, 2, 4 to 6, being **characterized in that** the machine has a vibration sensor that detects vibration of the machine,
wherein the determining device has a power ON/OFF circuit that selectively switches on and off power supply to the determining device, and
wherein, in response to a vibration detection signal obtained from the vibration sensor with the power supply to the machine blocked, the determining device provides an ON instruction to the power ON/OFF circuit and starts the detection of the rotation angle of the machine.

10. The displacement detector according to claim 9, being **characterized in that**, if the detection of the vibration of the machine does not last beyond a predetermined time and the detection of rotation of the machine does not last beyond a predetermined time, the determining device outputs an OFF instruction to the power ON/OFF circuit.

11. The displacement detector according to any one of claims 1 to 3 and 6, being **characterized in that** the determining device has a power ON/OFF circuit that selectively switches on and off power supply to the determining device, and
wherein, if the machine has been displaced, the determining device outputs an OFF instruction to the power ON/OFF circuit and ends the determination whether the machine has been displaced.

12. The displacement detector according to any one of claims 1 to 3 and 6, being **characterized in that** the determining device has a power ON/OFF circuit that selectively switches on and off power supply to the determining device,
wherein, if the power supply to the machine is blocked, the determining device outputs an ON instruction to the power ON/OFF circuit and starts the determination whether the machine has been displaced, and
wherein, if the power supply to the machine is resumed and if the machine has been displaced with the power supply to the machine blocked, the determining device outputs an OFF instruction to the power ON/OFF circuit and ends the determination whether the machine has been displaced.

13. A machine having the displacement detector according to any one of claims 1 to 12, being **characterized in that** the machine has a displacement determination processing section that communicates information with the displacement detector,
wherein, in response to a demand from the displacement determination processing section, the determining device transmits information indicating whether the machine has been displaced to the displacement determination processing section,
wherein, when a body power switch of the machine is turned on, the displacement determination processing section outputs an ON instruction to the power ON/OFF circuit and receives the information indicating whether the machine has been displaced, and
wherein, if the machine has been displaced, the displacement determination processing section restricts operation of the machine.

14. The machine having the displacement detector according to claim 13, being **characterized in that** the displacement determination processing section permits operation of the machine after a predetermined canceling operation has been carried out.
